(19) Europäisches Patentamt / European Patent Office / Office européen des brevets

(11) **EP 4 592 867 A1**

(12) **DEMANDE DE BREVET EUROPEEN**

(43) Date de publication:
**30.07.2025 Bulletin 2025/31**

(21) Numéro de dépôt: 25153979.7

(22) Date de dépôt: **24.01.2025**

(51) Classification Internationale des Brevets (IPC):
**G06F 16/353** (2025.01)    **G06N 20/00** (2019.01)

(52) Classification Coopérative des Brevets (CPC):
**G06F 16/353; G06N 3/045; G06N 20/00**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **24.01.2024 FR 2400703**

(71) Demandeur: **Lipstip**
**64000 Pau (FR)**

(72) Inventeur: **Girardin, Nicolas**
**64000 PAU (FR)**

(74) Mandataire: **A.P.I. Conseil**
**Technopôle Hélioparc**
**4, rue Jules Ferry**
**64000 Pau (FR)**

(54) **PROCÉDÉ DE CLASSIFICATION AUTOMATISÉ DE DOCUMENTS**

(57)    L'invention concerne un procédé (100) mis en oeuvre par ordinateur pour une classification d'un document numérique comportant du texte, le procédé comprenant les étapes suivantes

- Segmenter (130), par un ou plusieurs processeurs (10), le texte du document numérique (Di) en une pluralité de séquences textuelles (Sj) ;
- Calculer (140), par un ou plusieurs processeurs (10), un vecteur de séquence (VSj) pour chaque séquence textuelle (Sj) ;
- Classer (150), par un ou plusieurs processeurs (10), chaque séquence textuelle (Sj) dans au moins une d'une pluralité de catégories (Ck) ;
- Construire (160), par un ou plusieurs processeurs (10), un vecteur de document à n dimensions (VDi) au sein duquel au moins une dimension correspond à chacune desdites catégories, s ; et
- Appliquer (170), par un ou plusieurs processeurs (10), un modèle de classification au vecteur de document à n dimensions (VDi)

FIG. 1

EP 4 592 867 A1

**Description**

Domaine technique

L'invention concerne le domaine de la classification de documents, et plus particulièrement le domaine de la classification de documents numériques. L'invention concerne un procédé de mise en oeuvre par ordinateur pour une classification d'un document numérique comportant du texte, au sein d'un corpus de documents.

Art Antérieur

Les documents numériques textuels sont de plus en plus nombreux et de plus en plus complexes. Dans le cas de grandes bibliothèques numériques, la classification manuelle prend beaucoup de temps et est sujette à des erreurs. Les problématiques de classification sont également retrouvées dans les actions de classification thématique, l'analyse des sentiments, la classification par priorité et la classification juridique. Or, les classifications usuelles ne permettent pas d'identifier des signaux faibles dans un document numérique textuel. Ainsi, il est nécessaire de développer un système de classification automatique efficace pouvant identifier des signaux faibles et des combinaisons de sujets avec des temps de traitement réduit et des ressources matérielles réduites.

Historiquement, la classification des documents reposait sur des techniques basées sur des règles, qui impliquaient une ingénierie manuelle des caractéristiques et des règles heuristiques. Par exemple, les premières méthodes utilisaient la fréquence des termes inverse de la fréquence des documents (TF-IDF) et les n-grammes pour la représentation du texte, suivis de classificateurs linéaires ou de modèles d'arbres de décision. Ces approches, bien qu'efficaces pour les petits ensembles de données avec des domaines spécifiques, ont rencontré des défis en termes d'évolutivité et d'adaptabilité, en particulier dans la gestion de types de documents divers et évolutifs.

L'introduction de l'apprentissage automatique a apporté des avancées significatives dans la classification des documents. Les machines à vecteurs de support (SVM) et les K-Nearest Neighbors (KNN) ont été largement utilisées pour catégoriser les documents en fonction de caractéristiques prédéfinies. Les premiers réseaux neuronaux, tels que les perceptrons multicouches (MLP), ont également démontré une précision améliorée en capturant les relations non linéaires dans les données. Cependant, ces modèles étaient limités par des inefficacités de calcul et la dépendance à des fonctionnalités artisanales, ce qui limitait leur généralisabilité.

Ces dernières années ont vu l'émergence d'architectures d'apprentissage profond, qui exploitent des ensembles de données de formation à grande échelle et des ressources de calcul avancées. Les réseaux neuronaux convolutionnels (CNN), les réseaux neuronaux récurrents (RNN) et les modèles basés sur des transformateurs tels que BERT et GPT sont devenus l'état de l'art en matière de classification de texte. Ces modèles ont été appliqués à diverses tâches, notamment la classification des brevets et l'analyse des documents techniques, ce qui a permis d'améliorer considérablement la précision et l'évolutivité. Il a par exemple été proposé un modèle DeepPatent, qui utilisait des réseaux neuronaux convolutionnels et des intégrations de mots pour la classification des brevets (DeepPatent: patent classification with convolutional neural networks and word embedding ; Li et al., 2018). Bien qu'efficace pour les tâches à étiquette unique, ses performances étaient limitées par l'exclusion des caractéristiques hiérarchiques ou multimodales. Il a aussi été proposé des réseaux d'attention hiérarchiques pour la classification de documents (Hierarchical Attention Networks for Document Classification ; Yang et al., 2016). Ce modèle utilisait des mécanismes d'attention pour pondérer différemment les phrases et les mots dans une structure hiérarchique. Bien qu'il ait amélioré la représentation des documents, il était limité aux entrées textuelles uniquement, négligeant les informations multimodales. Enfin, TechDoc, une architecture d'apprentissage profond multimodale (Deep Learning for Technical Document Classification ; Jiang et al., 2021) combiner les CNN, les RNN et les réseaux neuronaux graphiques (GNN) pour classer les documents techniques à l'aide de données textuelles, visuelles et relationnelles. Bien qu'elle ait démontré une précision supérieure, sa dépendance à des processus de formation à forte intensité de calcul pose des problèmes d'évolutivité.

Bien que les solutions existantes apportent des avancées précieuses, elles ne parviennent pas à combler certaines lacunes critiques, telles que l'intégration transparente de données multimodales, les capacités de classification hiérarchique et l'évolutivité efficace. Ainsi, il existe un besoin pour une solution permettant d'analyser sémantiquement et contextuellement les documents numériques textuelle pour identifier des sujets d'intérêts abordés dans ces documents et cela avec des besoins en puissances de calculs tels que la solution peut être mise en oeuvre sur un ordinateur de bureau.

Résumé de l'invention

L'invention vise à pallier ces inconvénients. Ce qui suit présente un résumé simplifié d'aspects, de modes de réalisation et d'exemples sélectionnés de la présente invention dans le but de fournir une compréhension de base de l'invention. Cependant, ce résumé ne constitue pas un aperçu exhaustif de tous les aspects, modes de réalisation et exemples de l'invention. Son seul but est de présenter des aspects, modes de réalisation et exemples sélectionnés de l'invention sous une forme concise en guise d'introduction à la description plus détaillée des aspects, modes de réalisation et exemples de l'invention qui suivent le résumé.

L'invention porte sur un procédé mis en oeuvre par ordinateur pour une classification d'un document numérique comportant du texte, au sein d'un corpus de documents numériques, le procédé comprenant les étapes suivantes :

- Segmenter, par un ou plusieurs processeurs, le texte du document numérique en une pluralité de séquences textuelles ;
- Calculer, par un ou plusieurs processeurs, un vecteur de séquence pour chaque séquence textuelle, de préférence en utilisant une approche de vectorisation sensible au contexte ;
- Classer, par un ou plusieurs processeurs, chaque séquence textuelle dans au moins une d'une pluralité de catégories, par exemple en comparant le vecteur de séquence avec des vecteurs de référence de catégorie(s) prédéfinie(s) ; De préférence chaque séquence est associée à une seule catégorie ;
- Construire, par un ou plusieurs processeurs, un vecteur de document à n dimensions, de préférence à une dimension, au sein duquel au moins une dimension correspond à chacune desdites catégories, les valeurs dudit vecteur de document étant fonction de la répartition des séquences textuelles affectées à chacune de ces catégories ; et
- Appliquer, par un ou plusieurs processeurs, un modèle de classification, par exemple un modèle de classification entraîné, au vecteur de document à n dimensions, ladite application générant une attribution de classification pour le document numérique.

Par exemple, l'invention porte sur un procédé mis en oeuvre par ordinateur pour une classification d'un document numérique comportant du texte, au sein d'un corpus de documents, le procédé comprenant :

- Réception, par un ou plusieurs processeurs, d'un document numérique comportant du texte et destiné à être catégorisé ;
- Identification, par un ou plusieurs processeurs, d'une pluralité de séquences textuelles dans le document comportant du texte ;
- Calcul, par un ou plusieurs processeurs, d'un vecteur pour chacune des séquences textuelles ;
- Identification, par un ou plusieurs processeurs, d'une catégorie la plus probable pour chacun des vecteurs de séquence (VS) ;
- Calcul, par un ou plusieurs processeurs, d'un vecteur de document à n dimensions, de préférence une dimension, les valeurs dudit vecteur de document étant fonction du nombre de vecteur de séquence étant associé à chacune des catégories identifiées précédemment ;
- Catégorisation, par un ou plusieurs processeurs, du document comportant du texte à partir du vecteur de document à n dimensions et d'un modèle d'apprentissage, de préférence le modèle d'apprentissage étant spécifiquement entraîné à la classification de documents comportant du texte à partir de vecteur de document à n dimensions.

Dans les méthodes de l'art antérieur, de nombreuses approches reposent soit sur des intégrations de documents entiers, soit sur des méthodes basées sur des fenêtres fixes. Par exemple, les méthodes les plus répandues dans la classification de documents telles que les méthodes basées sur BERT traitent généralement chaque document comme un seul bloc de texte. Au contraire, la présente invention divise le texte en plusieurs segments, attribue chaque segment à une catégorie, puis agrège ces classifications par segment. Ce processus permet de capturer des indicateurs localisés à basse fréquence dans de longs passages de texte (par exemple, des termes techniques clairsemés dans de longs documents scientifiques).

Une telle approche permet de combiner en une analyse l'exploitation de caractéristiques locales et globales. En effet, les signaux locaux sont extraits par une seule passe d'attention. En revanche, l'invention divulguée classe chaque segment individuellement, préservant ainsi le contexte de manière autonome avant la consolidation. Cette structure offre un moyen de détecter des signaux faible à différents endroits du texte, au-delà de ce qu'un mécanisme d'attention au niveau d'un jeton unique pourrait produire (confère les mécanismes d'attention classiques). En outre, une telle approche permet d'améliorer l'interprétabilité. En effet, le vecteur document, issu de segments mappés sur chaque étiquette, permet aux utilisateurs ou aux systèmes d'identifier quelles catégories apparaissent le plus fréquemment dans les segments d'un document, ce qui améliore l'intelligibilité et facilite l'assurance qualité lors du déploiement.

L'étape de segmentation de la présente invention peut s'adapter à des règles spécifiques à un domaine variable ou à des points d'arrêt sémantiques ou au niveau de la phrase avancés, ce qui permet une couverture plus ciblée dans les domaines où la longueur ou la structure du texte est très variable (par exemple, les avis juridiques, les contrats ou les rapports techniques). En outre, cette procédure offre la possibilité de personnaliser la solution technique au niveau du segment (par exemple, partitionnement avancé spécifique à un domaine), puis de combiner ces classifications de segments à l'étape du vecteur de document. Cela peut être affiné si certains segments nécessitent un traitement spécial ou un filtrage basé sur le domaine avant l'agrégation finale.

Il est fréquent que des documents à étudier fassent référence à de multiple sujets et que ces sujets soient dispersés dans des sections ne sont souvent pas bien servis par une seule intégration globale. La présente invention consistant à catégoriser chaque segment séparément permet de conserver la diversité thématique. Ainsi, chaque classification de segment est ancrée dans un contexte localisé. Cette approche est particulièrement utile lorsqu'un document couvre plusieurs sujets qui pourraient autrement rester sous-représentés dans un intégration unifié. Contrairement aux vectoriseurs simplistes de n-grammes ou aux vectoriseurs simplistes de n-grammes des approches statistiques antérieures, l'invention peut utiliser des plongements contextualisés au niveau du segment. Cela préserve le sens du mot et le contexte du domaine pour chaque segment avant la synthèse finale, ce qui permet une meilleure fidélité dans les textes multi-sujets ou multi-sections.

Ainsi, la présente invention offre une détectabilité accrue de concepts localisés, des sorties interprétables au niveau de la distribution pour chaque étiquette et une couverture robuste des documents multi-sujets. Par conséquent, il prend en charge un plus large éventail de besoins d'analyse de texte dans le monde réel tout en conservant les avantages des intégrations modernes pouvant se baser sur des transformateurs.

En outre, la répartition des calculs de classification permet d'améliorer sensiblement la gestion de la mémoire et l'efficacité de la classification. Cette réorganisation des étapes de classification permet d'optimiser l'utilisation des ressources de calcul lors de classification à grande échelle en limitant les tâches de classification complètes aux sous-parties (segments) de texte. Elle permet de réduire la propagation des erreurs en localisant les erreurs de classification au niveau du segment, améliorant ainsi la fiabilité globale. Enfin elle permet une interprétabilité des résultats avec une faible empreinte carbone la segmentation des étapes permet aux opérateurs du système de déterminer rapidement quels segments ont déclenché certaines classifications.

Selon d'autres caractéristiques optionnelles du procédé, ce dernier peut inclure facultativement une ou plusieurs des caractéristiques suivantes, seules ou en combinaison :

- le document numérique est sélectionné parmi tout type de document comportant du texte. De préférence comportant au moins 30 mots, de préférence au moins 50 mots, de façon plus préférée au moins 100 mots, de façon encore plus préférée au moins 300 mots et avantageusement au moins 1500 mots. le document numérique est par exemple sélectionné parmi : les livres électroniques ou autres textes longs qui peuvent être classés en fonction de leur contenu. cela peut être utile pour le catalogage et l'accès dans une bibliothèque numérique ; les courriers électroniques. une quantité énorme de courriels est échangée chaque jour. l'invention permet de classer automatiquement les courriels en fonction de leur contenu, ce qui facilite la gestion efficace des informations. elle permet en particulier d'identifier plus rapidement des catégories faiblement représentées ou des catégories associées à un faible nombre de mots dans le document. cela peut être pertinent dans le cadre d'identification de données sensibles masquées au sein d'un texte ; les messages sur les médias sociaux. les messages postés sur les plateformes de médias sociaux peuvent également être classés en fonction de leur contenu par exemple à des fins de modération ; les documents juridiques. les cabinets d'avocats traitent quotidiennement un grand nombre de documents, tels que des contrats, des dossiers judiciaires, des textes législatifs, etc. la classification de ces documents peut faciliter la recherche d'informations ; la littérature scientifique : la classification de documents de recherche ou d'autres documents techniques peut être utile aux organismes de recherche, aux universités et aux éditeurs pour mieux organiser et indexer leurs bases de données documentaires ; les articles de presse. les sociétés de médias peuvent mieux organiser leur contenu en ligne en classant les articles d'actualité en fonction de leur contenu.

- le document numérique à classifier peut-être obtenu à partir de diverses sources. Cela peut inclure un stockage local, un stockage basé sur le cloud, un serveur distant ou directement à partir d'une interface de saisie utilisateur. Le(s) processeur(s) doivent être capables de gérer différents formats de fichiers texte tels que .txt, .docx, .pdf, etc.

- il comporte une étape de validation du contenu et de la structure du document. Cela peut inclure certaines vérifications pour éliminer ou marquer des éléments potentiels à l'origine d'erreurs tels qu'un formatage inapproprié, un texte inintelligible, etc.

- il comporte une étape de prétraitement des données. Cette étape peut comporter une normalisation du contenu du document numérique et en particulier du texte. Cela peut inclure des processus tels que la conversion de tout le texte en minuscules ou en majuscules, la suppression des signes de ponctuation, la suppression des espaces blancs, la suppression des mots vides, la gestion de différents encodages, etc.

- il comporte une étape de détection de langue. Par exemple, un module de détection de langue peut être implémenté pour identifier la langue du document par exemple sur la base d'un algorithme prédéfini avant un traitement ultérieur.

- il comporte une étape de préfiltrage pour séparer les documents numériques reçus en différents compartiments ou catégories initiaux en fonction de règles ou de filtres prédéfinis spécifiques avant de procéder aux étapes de traitement et de classification. Par exemple, l'étape de préfiltrage peut comporter une étape de vérification de l'appartenance au corpus de document.

- il comporte une identification d'une pluralité de séquences textuelles au sein du document.

- l'étape d'identification d'une pluralité de séquences textuelles comporte une segmentation au niveau des phrases.

- l'étape d'identification d'une pluralité de séquences textuelles comporte une segmentation sémantique.

- l'étape d'identification d'une pluralité de séquences textuelles comporte une segmentation des phrases.
- l'étape d'identification d'une pluralité de séquences textuelles comporte une extraction des noms propres.
- l'étape de calcul, par un ou plusieurs processeurs, d'un vecteur pour chacune des séquences textuelles permet de convertir chaque séquence textuelle identifiée en une forme numérique qu'un ordinateur peut traiter plus rapidement.
- l'étape de calcul, par un ou plusieurs processeurs, d'un vecteur comporte l'utilisation pour une majorité des vecteurs d'au moins 4 mots, de préférence d'au moins 5 mots pour le calcul du vecteur. Cela permet de saisir le contexte ou au moins une partie du contexte.
- l'étape de calcul d'un vecteur comporte l'utilisation d'un réseau de neurones.
- l'étape de calcul d'un vecteur comporte l'utilisation d'un réseau de neurone comportant un mécanisme d'attention, tel qu'un modèle basé sur des transformers (comme BERT, GPT).
- l'étape d'identification d'une catégorie la plus probable pour chacun des vecteurs de séquence permet l'attribution d'une étiquette catégorielle à chaque vecteur de séquence sur la base de sa proximité avec le vecteur de référence lié à chaque catégorie.
- l'étape d'identification d'une catégorie la plus probable comporte une étape de calcul d'une similarité cosinusoïdale.
- l'étape d'identification d'une catégorie la plus probable comporte une étape de regroupement hiérarchique, également connu sous le nom de regroupement agglomératif. Cette méthode d'analyse en grappes permet de construire une hiérarchie de grappes. Il s'agit d'une alternative au clustering plat, où l'algorithme crée un certain nombre de clusters et assigne chaque point à un cluster. En particulier, cette étape peut comporter : assigner chaque point de données à sa propre grappe, ce qui signifie que s'il y a "N" points de données, nous avons "N" grappes au départ ; Calculer la matrice de proximité qui contient la distance entre tous les points. Identifiez la paire de grappes la plus proche et fusionnez-les en une seule grappe, de sorte que le nombre de grappes soit réduit d'une unité. Recalculez les distances entre la nouvelle grappe et chacune des anciennes grappes. Répétez les étapes 3 et 4 jusqu'à ce que tous les points de données soient regroupés en une seule grappe. Le résultat est une représentation arborescente des points de données appelée dendrogramme, utile pour comprendre les données à différents niveaux de regroupement. À différents niveaux du dendrogramme, il est possible de choisir différentes grappes de points de données en coupant le dendrogramme au niveau souhaité. De façon préférée la méthode de regroupement est une méthode de type BIRCH (Balanced itérative Reducing and Clustering using Hiérarchies) ou CURE (Clustering Using Représentatives)..
- l'étape de calcul d'un vecteur de document VDi les valeurs de chacune des dimensions dudit vecteur de document VDi étant fonction du nombre de vecteurs de séquence associés à chacune des catégories.
- l'étape de calcul d'un vecteur de document VDi comporte un comptage des séquences.
- l'étape de calcul d'un vecteur de document VDi comporte une normalisation.
- l'étape de catégorisation du document numérique comporte la mise en oeuvre d'arbres de décision.
- l'étape de catégorisation du document numérique comporte la mise en oeuvre de machines à vecteurs de support (SVM).
- l'étape de catégorisation du document numérique comporte la mise en oeuvre de de bayesien naïf.
- l'étape de catégorisation du document numérique comporte la mise en oeuvre de de réseaux de neurones.
- l'étape de catégorisation du document numérique comporte la mise en oeuvre de de méthode des K voisins les plus proches (k-NN) ou méthodes dérivées.
- à l'étape d'identification d'une catégorie, la catégorie est déterminée par comparaison du vecteur de séquence à des vecteurs de référence, chacun des vecteurs de référence étant associé à une catégorie et le vecteur de séquence étant associé à la catégorie du vecteur de référence le plus proche.
- à l'étape d'identification d'une catégorie, le vecteur de référence le plus proche du vecteur de séquence est déterminé par une analyse de similarité cosine.
- il comporte une identification des séquences textuelles ayant été impliquées dans la classification du document.
- il comporte une identification au sein du corpus de document de documents associés à des vecteurs de documents présentant une similarité supérieure à un seuil prédéterminé
- il comporte une génération, par un ou plusieurs processeurs, d'une représentation numérique du document comportant des noeud et des edges, les noeud étant chacun associé à au moins une catégorie de séquences.
- l'étape de segmentation en une pluralité de séquences textuelles (Sj) comporte une segmentation au niveau des phrases.
- l'étape de segmentation en une pluralité de séquences textuelles (Sj) comporte une segmentation sémantique.
- l'étape de segmentation en une pluralité de séquences textuelles (Sj) comporte une extraction d'entités.

- l'étape de calcul, par un ou plusieurs processeurs, d'un vecteur de séquence (VSj) comporte l'utilisation pour une majorité des vecteurs d'au moins 4 mots, de préférence d'au moins 5 mots pour le calcul du vecteur.

- l'étape de calcul d'un vecteur de séquence (VSj) comporte l'utilisation d'un réseau de neurone comportant un mécanisme d'attention, tel qu'un modèle basé sur des transformers (comme BERT, GPT).
- l'étape de classement (150) comporte l'identification d'une catégorie (Ck) la plus probable utilisant une étape de calcul d'une similarité cosinusoïdale.
- l'étape de classement (150) comporte l'identification d'une catégorie (Ck) la plus probable, l'identification comportant une étape de regroupement hiérarchique, également connu sous le nom de regroupement agglomératif.
- l'étape de calcul d'un vecteur de document VDi comporte une normalisation.
- l'étape de classification du document numérique comporte la mise en oeuvre de de réseaux de neurones.
- à l'étape d'identification d'une catégorie (Ck), la catégorie (Ck) est déterminée par comparaison du vecteur de séquence (VS) à des vecteurs de référence (VR), chacun des vecteurs de référence étant associé à une catégorie et le vecteur de séquence étant associé à la catégorie du vecteur de référence le plus proche.
- à l'étape d'identification d'une catégorie (Ck), le vecteur de référence le plus proche du vecteur de séquence est déterminé par une analyse de similarité cosine.
- il comporte une identification des séquences textuelles ayant été impliquées dans la classification du document.
- il comporte une identification au sein du corpus de document de documents associés à des vecteurs de documents présentant une similarité supérieure à un seuil prédéterminé
- il comporte une génération, par un ou plusieurs processeurs, d'une représentation numérique du document comportant des noeud et des bords, les noeud étant chacun associé à au moins une catégorie de séquences.

Brève description des dessins

D'autres caractéristiques et avantages de l'invention seront mieux compris à la lecture de la description qui va suivre et en référence aux dessins annexés, donnés à titre illustratif et nullement limitatif.

La figure 1 représente un procédé mis en oeuvre par ordinateur pour une classification d'un document numérique comportant du texte selon l'invention.

La figure 2 représente un système de classification d'un document numérique comportant du texte.

Les figures ne respectent pas nécessairement les échelles, notamment en épaisseur, et ce à des fins d'illustration.

Des aspects de la présente invention sont décrits en référence à des organigrammes et / ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en oeuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en oeuvre par des systèmes matériels spéciaux qui exécutent les fonctions ou actes spécifiés ou effectuer des combinaisons de matériel spécial et d'instructions informatiques.

Description détaillée

L'expression « document » ou « document numérique » au sens de l'invention peut désigner un ensemble d'informations codées sous une forme exploitable par un ou plusieurs processeurs, indépendamment de son format, de son support ou de son mode d'accès. Il peut s'agir de fichiers enregistrés localement ou dans un environnement distribué (cloud, bases de données, serveurs distants). Ainsi, l'expression « document numérique comportant du texte » au sens de l'invention peut se rapporter à toute ressource textuelle sous forme électronique, contenant au moins une séquence de texte et pouvant être stockée, traitée ou classifiée par un système informatique. Il peut s'agir de fichiers de divers formats tels que .txt, .pdf, .docx, ou encore de messages issus de plateformes de communication. En outre, ces documents numériques comportant du texte peuvent comporter majoritairement des images ou graphismes. De façon préférée, l'invention s'applique à des documents comportant une majorité de texte.

L'expression « corpus de documents » au sens de l'invention peut se rapporter à un ensemble de documents numériques. Par exemple, un corpus de documents selon l'invention peut comprendre au moins deux documents. Ces documents peuvent être rassemblés pour former un corpus en vue d'un traitement automatisé, notamment pour l'entraînement d'un modèle de classification, pour l'analyse de leur distribution thématique, ou pour effectuer une comparaison par similitude entre les différents documents.

L'expression « séquences textuelles » au sens de l'invention peut se rapporter à des portions de texte extraites d'un document numérique comportant du texte, pouvant contenir une séquence ordonnée de mots, phrases ou des ensembles de termes associés. Les séquences textuelles peuvent, entre autres choses, servir d'entrée à un modèle pour l'analyse du contenu et l'assignation d'une catégorie. Ces séquences textuelles peuvent par exemple prendre la forme d'une "succession de tokens textuels" ou d'une "séquence ordonnée d'unités textuelles élémentaires".

L'expression « Vecteur de séquence » ou « Vecteur de séquence textuelle »au sens de l'invention peut se rapporter à un tableau unidimensionnel contenant des valeurs créées par un algorithme prédéterminé à partir de séquences de texte identifiées dans le document fourni. En particulier, le tableau peut correspondre à un tableau de valeurs numériques encapsulant les caractéristiques sémantiques et contextuelles d'une séquence textuelle, destiné à être comparé à des vecteurs de référence pour une classification.

L'expression « Vecteurs de documents » au sens de l'invention peut se rapporter à des tableaux à n dimensions, de préférence unidimensionnels, dans lesquels chaque valeur est fonction d'une quantité ou d'une fréquence ou une proportion ou toute autre mesure de séquence du document et appartenant à une catégorie. Ainsi, les valeurs au sein de chaque éléments du tableau peuvent être fonction de la quantité de vecteurs de séquence textuelle liés à chacun d'entre eux. L'expression « vecteur de document multidimensionnel » au sens de l'invention peut également désigner un tableau de dimensions n, où chaque valeur représente l'influence d'une catégorie spécifique sur la classification du document, permettant ainsi une interprétation globale de son contenu textuel.

L'expression « Vecteurs de référence » au sens de l'invention peut se rapporter à un ensemble de vecteurs prédéfinis, par exemple chacun associé à une classe (e.g. catégorie). Ainsi, un vecteur de séquence est comparé à chaque vecteur de référence (VR) pour déterminer une catégorie associée au vecteur de séquence. En particulier, un vecteur de référence peut être un vecteur de séquence textuelle de référence.

L'expression « vecteurs de référence » au sens de l'invention peut se rapporter à un ensemble de vecteurs caractéristiques, chacun associé à une classe spécifique, et servant de référence pour comparer et classifier les vecteurs de séquence textuelle d'un document numérique.

Le terme « contexte » au sens de l'invention peut se rapporter à l'ensemble des éléments linguistiques et sémantiques entourant une séquence textuelle dans un document numérique, influençant ainsi la compréhension et la catégorisation de cette séquence. Il s'agit d'un cadre d'interprétation qui prend en compte la proximité des mots, la structure syntaxique et les relations inter-phrases pour améliorer la précision du processus de classification selon l'invention.

L'expression « classification » au sens de l'invention peut se rapporter à un processus exécuté par un ou plusieurs processeurs permettant d'assigner un document numérique à une ou plusieurs catégories prédéfinies ou dynamiques, en fonction de ses caractéristiques textuelles. Ce processus s'appuie sur des algorithmes de catégorisation supervisée ou non supervisée exploitant des représentations vectorielles du document. Également, la classification peut comprendre la comparaison en fonction des similitudes entre le document numérique comportant du texte et un corpus de texte, dans lequel il est nécessaire de rechercher des similitudes.

Par « modèle » ou « règle » ou « algorithme de calcul », il faut comprendre au sens de l'invention une suite finie d'opérations ou d'instructions permettant de sélectionner des valeurs de quantité d'agent défloculant et d'agent d'activation, c'est-à-dire par exemple de former des groupes préalablement définis Y associé à des scores ou des catégories en fonction de corrélation avec des quantités d'agent défloculant D et d'agent d'activation A d'une part et une ou plusieurs valeurs de propriétés physicochimiques de terre argileuse excavée E. La mise en oeuvre de cette suite finie d'opérations permet par exemple d'attribuer une étiquette $Y_0$ à une observation décrite par un ensemble de caractéristiques $D_0$, $A_0$, $E_0$, grâce par exemple à la mise en oeuvre d'une fonction f susceptible, de reproduire Y ayant observé D, A et E.

$$Y = f\,(D,A,E) + e$$

où e symbolise le bruit ou erreur de mesure.

Ici Y peut par exemple être la capacité (oui/non) à former un matériau de construction.

Avantageusement, l'algorithme de calcul peut établir des groupes préalablement définis, associer d'autres valeurs telles que des valeurs de propriétés mécaniques M du matériau de construction pouvant être formé à partir de ces quantités. Ainsi avec la formule « M = f(D,A,E) + e » il est possible de sélectionner des valeurs de quantité permettant de former des matériaux de construction présentant des propriétés mécaniques prédéterminées.

Le terme « modèle d'apprentissage » peut correspondre, au sens de l'invention, dans le contexte de l'intelligence artificielle et de l'apprentissage automatique, à une structure mathématique ou un algorithme conçu pour apprendre des motifs (dits patterns en terminologie anglo-saxonne) ou des comportements à partir de données mesurées ou rentrées dans une base de données.

Par « méthode de d'apprentissage supervisé », on entend au sens de l'invention un procédé permettant de définir une fonction f à partir d'une base de n observations étiquetées ($X_{1...n}$, $Y_{1...n}$, $D_{1...n}$, , $A_{1...n}$, , $E_{1...n}$) où par exemple $Y = f(D,A,E) + e$ ou $M = f(D,A,E) + e$.

On entend par « traiter », « calculer », « déterminer », « afficher », « extraire » « comparer » ou plus largement « opération exécutable », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. En particulier, des opérations de calcul sont effectuées par le processeur du dispositif, les données produites sont inscrites dans un champ correspondant dans une mémoire de données et ce ou ces champs peuvent être restitués à un utilisateur par exemple au travers d'une Interface Homme Machine adaptée, tels qu'à titre d'exemples non limitatifs un écran d'un objet connecté, mettant en forme de telles données. Ces opérations peuvent se baser sur des applications ou des logiciels.

Les termes ou expressions « application », « logiciel », « code de programme », et « code exécutable » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçue pour l'exécution sur un système informatique.

On entend par « processeur », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (« ASIC » selon une terminologie anglo-saxonne) et un circuit logique programmable. Un seul processeur ou plusieurs autres unités peuvent être utilisées pour mettre en oeuvre l'invention.

Les techniques connues de classification de texte ont du mal à répondre aux exigences nuancées des documents numériques multi-sujets ou longs en raison de leur dépendance à l'égard de représentations en un seul passage. En outre, ces pipelines conventionnels ne parviennent pas à identifier quels segments de texte spécifiques contribuent à des décisions de classification particulières, ce qui entraîne une réductibilité et une classification erronée plus fréquente dans des contextes à multiples facettes. Cette opacité entrave non seulement l'interprétabilité, mais ralentit également les temps de réaction dans les tâches de filtrage de contenu, d'examen des documents juridiques et d'analyse de données.

De plus, les approches typiques basées sur l'attention ou au niveau des jetons traitent chaque entrée comme un seul bloc, ce qui peut masquer des signaux localisés de basse fréquence ou des unités textuelles plus petites d'importance significative. Dans les scénarios de classification à grande échelle ou en temps réel, une telle dépendance excessive à une vue monolithique du document déclenche également des inefficacités dans l'utilisation de la mémoire et la charge de calcul. Les méthodes traditionnelles classifient l'intégralité du texte en une seule fois, en négligeant potentiellement des indices subtils ou spécifiques au domaine, ou nécessitent plusieurs passes ad hoc qui augmentent la surcharge et entravent les performances du système. L'absence d'une approche fine peut entraîner une faible adaptabilité aux changements de structure du texte, en particulier lorsqu'il s'agit de documents de domaine variés tels que des contrats juridiques, des rapports scientifiques ou des articles de blog à plusieurs sections. Les utilisateurs et les opérateurs du système sont également confrontés à des difficultés pour diagnostiquer rapidement les erreurs de classification, car il n'est pas clair comment les différents segments de texte influencent le résultat final de la classification. À mesure que les volumes de données augmentent et que les textes deviennent plus hétérogènes, les simples intégrations locales ou les intégrations globales uniques ne suffisent pas à fournir la précision, la granularité et l'interprétabilité requises dans le monde réel. Par conséquent, il est urgent de disposer d'un système de classification capable de répondre aux faiblesses des systèmes existants.

Pour pallier ces faiblesses, il a été développé un nouveau procédé 100, mis en oeuvre par ordinateur, pour une classification d'un document numérique comportant du texte. Ce procédé permet en particulier de classer un document numérique au sein d'un corpus de documents et donc par rapport à d'autres documents numériques comportant du texte.

La classification au sens de l'invention peut être défini comme un processus systémique exécuté par une ou plusieurs installations informatiques, dans lequel un document numérique est catégorisé ou étiqueté dans une ou plusieurs classifications prédéfinies ou non en fonction de ses caractéristiques ou attributs. Le processus de classification implique généralement l'utilisation d'algorithmes ou de modèles spécifiquement entraînés pour discerner les catégories à partir de la représentation vectorielle du document numérique. En fonction de la taille et de la complexité des vecteurs et du modèle de formation, la classification d'un document numérique peut impliquer l'application de l'apprentissage automatique, de scores de probabilité, d'arbres de décision ou autres méthodologies de classification connues dans l'analyse de données.

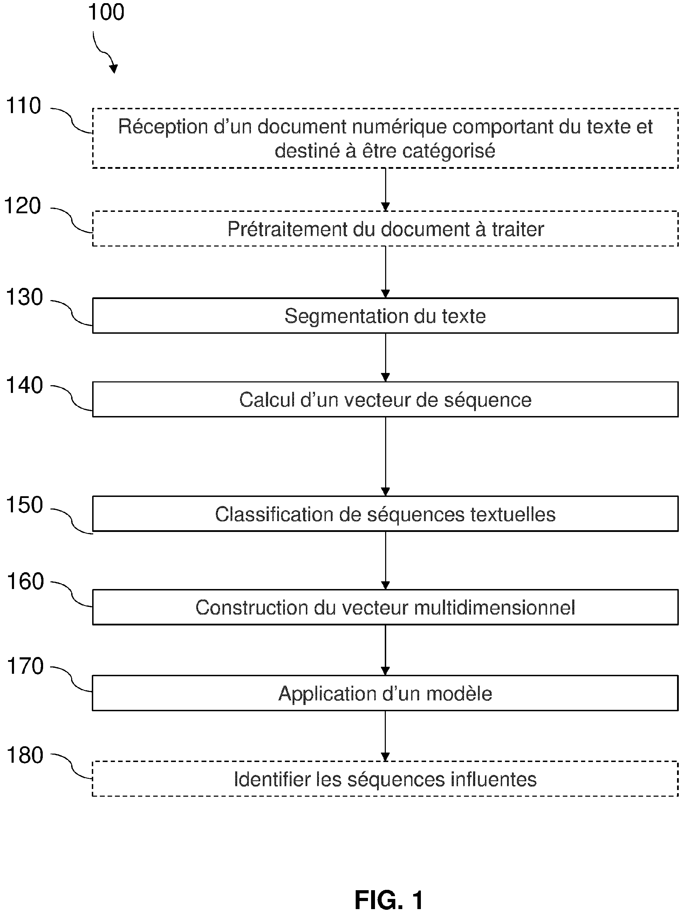

Comme cela est illustré à la figure 1, un procédé selon l'invention comporte en particulier les étapes de : segmenter 130 en une pluralité de séquences textuelles (Sj) du texte d'un document numérique Di ; Calculer 140 un vecteur de séquence VSj pour chaque séquence textuelle Sj ; Classer 150 chaque séquence textuelle Sj dans au moins une d'une pluralité de catégories Ck ; Construire 160 un vecteur de document unidimensionnel ou multidimensionnel VDi indiquant le nombre ou la fraction de séquences textuelles mappées à chaque catégorie ; Appliquer 170, par un ou plusieurs processeurs 10, un modèle au vecteur de document à n dimensions VDi pour déterminer une attribution de catégorie finale pour le document numérique.

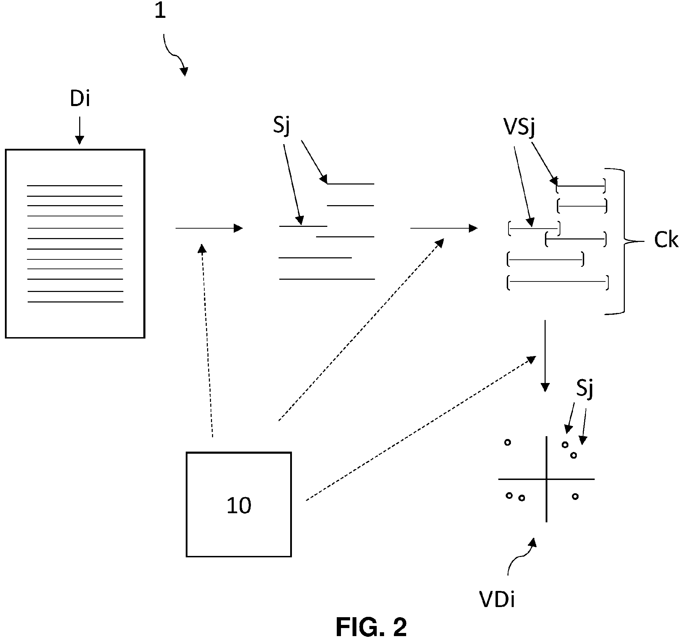

En outre, comme illustré à la figure 2, le procédé de classification 100 selon l'invention peut comporter les étapes suivantes : réception 110 d'un document numérique (Di) comportant du texte et destiné à être catégorisé ; Prétraitement du document numérique à traiter (120) ; Identification de séquences influentes 180 dans la classification du document numérique.

En outre, l'invention porte sur un procédé mis en oeuvre par ordinateur pour une classification d'un document numérique comportant du texte au sein d'un corpus de documents. Il porte également sur un système spécialement configuré pour mettre en oeuvre le procédé selon l'invention.

Le procédé selon l'invention peut comporter les étapes suivantes :

- Réception, par un ou plusieurs processeurs, d'un document numérique Di comportant du texte et destiné à être catégorisé ;
- Identification, par un ou plusieurs processeurs, d'une pluralité de séquences textuelles (Sj) dans le document numérique comportant du texte ;
- Calcul, par un ou plusieurs processeurs, d'un vecteur VSj pour chacune des séquences textuelles ;
- Identification, par un ou plusieurs processeurs, d'une catégorie Ck la plus probable pour chacun des vecteurs de séquence VS ;
- Calcul, par un ou plusieurs processeurs, d'un vecteur de document VDi à n dimensions, de préférence une dimension, les valeurs dudit vecteur de document VDi étant fonction du nombre de vecteur de séquence étant associé à chacune des catégories identifiées précédement ; et
- Catégorisation, par un ou plusieurs processeurs, du document numérique comportant du texte à partir du vecteur de document VDi à n dimensions et d'un modèle d'apprentissage spécifiquement entraîné à la classification de documents comportant du texte à partir de vecteur de document VDi à n dimensions.

Un procédé de classification 100 selon la présente invention pourra nécessiter en amont la mise en oeuvre de plusieurs étapes permettant de préparer les éléments utilisé dans le cadre de l'exécution du procédé.

Par exemple, la présente invention peut comporter : Une étape de préparation d'un modèle de segmentation des documents ; Une étape de préparation d'un modèle de vectorisation des séquences ; Une étape de prétraitement d'un modèle de catégorisation pour la catégorisation des séquences de texte ; Une étape d'entrainement d'un modèle de classification des documents sur la base du vecteur de document.

Un document numérique comportant du texte pouvant être traité par un procédé 100 selon l'invention peut être sélectionné parmi tout type de document comportant du texte. De préférence, un document numérique comportera au moins 30 mots, de préférence au moins 50 mots, de façon plus préférée au moins 100 mots, de façon encore plus préférée au moins 300 mots et avantageusement au moins 1500 mots.

Un document numérique peut par exemple être sélectionné parmi :

  - - les livres électroniques ou autres textes longs qui peuvent être classés en fonction de leur contenu. cela peut être utile pour le catalogage et l'accès dans une bibliothèque numérique.
  - - les courriers électroniques. une quantité énorme de courriels est échangée chaque jour. l'invention permet de classer automatiquement les courriels en fonction de leur contenu, ce qui facilite la gestion efficace des informations. elle permet en particulier d'identifier plus rapidement des catégories faiblement représentées ou des catégories associées à un faible nombre de mots dans le document. cela peut être pertinent dans le cadre d'identification de données sensibles masquées au sein d'un texte.
  - - les messages sur les médias sociaux. les messages postés sur les plateformes de médias sociaux peuvent également être classés en fonction de leur contenu par exemple à des fins de modération.
  - - les documents juridiques, les cabinets d'avocats traitent quotidiennement un grand nombre de documents, tels que des contrats, des dossiers judiciaires, des textes législatifs, etc. la classification de ces documents peut faciliter la recherche d'informations. Cela inclut également les demandes de brevet ou les brevet délivrés.
  - - la littérature scientifique. La classification de documents de recherche ou d'autres documents techniques peut être utile aux organismes de recherche, aux universités et aux éditeurs pour mieux organiser et indexer leurs bases de données documentaires.
  - - les articles de presse. les sociétés de médias peuvent mieux organiser leur contenu en ligne en classant les articles d'actualité en fonction de leur contenu.

Le document numérique à classifier peut être obtenu à partir de diverses sources. Cela peut inclure un stockage local, un stockage basé sur le cloud, un serveur distant ou directement à partir d'une interface de saisie utilisateur. Ainsi, les sources de ces documents peuvent inclure des stockages locaux, des serveurs distants, des environnements virtualisés ou des services de messagerie et de collaboration en ligne. En effet, un procédé selon l'invnetion peut être compatible avec des connecteurs standard (protocoles REST, WebDAV, FTP, etc.) ou des systèmes de bases de données (SQL, NoSQL).

En outre, un procédé selon l'invention peut gérer différents formats de fichiers texte tels que .txt, .docx, .pdf, etc.

Avant la phase de classification, le document numérique peut être converti en texte brut ou en représentation structurée (JSON ou XML) suivant ses caractéristiques initiales. Une étape de détection de la langue, ainsi que la mise à l'échelle des métadonnées, facilitent un prétri selon les exigences de la classification.

Un procédé 100 selon l'invention peut comporter une étape de prétraitement du document numérique.

Cette étape optionnelle vise à préparer le document numérique afin de simplifier et fiabiliser les traitements ultérieurs (tels que la segmentation en séquences, la vectorisation et la classification). Elle peut inclure plusieurs sous-opérations, chacune pouvant être adaptée en fonction des spécificités du document numérique (longueur, langue, structure) et en fonction de la finalité souhaitée (ex. classification thématique, détection de mots-clés spécialisés).

Ainsi, le procédé selon l'invention peut comporter une étape de validation du contenu et de la structure du document numérique. Dans le cadre de cette étape, le procédé est configuré pour identifier la présence de balises ou d'éléments non textuels (tableaux mal définis, champs erronés, contenu binaire). Ces éléments peuvent ensuite être filtrés ou transformés.

Dans certains cas, on peut identifier des sections incohérentes (caractères illisibles, encodage inadapté) et les signaler ou les mettre de côté, évitant ainsi l'introduction de données inexploitables dans le pipeline. En particulier, le procédé selon l'invention peut comporter une étape de validation du contenu et de la structure du document. Cela peut inclure certaines vérifications pour éliminer ou marquer des éléments potentiels à l'origine d'erreurs tels qu'un formatage inapproprié, un texte inintelligible, etc.

Le procédé peut également comporter une normalisation textuelle. Le contenu textuel peut subir une conversion en minuscules ou majuscules afin de rendre homogène l'analyse lexicale. Les signes de ponctuation, espaces superflus ou caractères spéciaux peuvent être supprimés ou réencodés pour éviter les décalages dans les phases de segmentation. Les mots vides, c'est-à-dire les mots de langue courante n'apportant pas de valeur discriminante (par ex. « et », « de », « le »), peuvent être éliminés. Cependant, dans certains cas d'usage, on peut adapter la liste de ces mots pour des raisons de précision (certains termes considérés comme vides en français peuvent ne pas l'être dans un contexte juridique ou technique). Lorsque le texte présente des éléments propres à un domaine (acronymes, formules spécialisées, jargon métier), un enrichissement supplémentaire peut être prévu pour garantir que ces expressions ne soient pas systématiquement éliminées.

Le procédé peut aussi comporter une étape de détection de langue. Par exemple, un module de détection de langue peut être implémenté pour identifier la langue du document numérique par exemple sur la base d'un algorithme prédéfini avant un traitement ultérieur. Il peut comporter une étape de pré filtrage pour séparer les documents numérique reçus en différents compartiments ou catégories initiaux en fonction de règles ou de filtres prédéfinis spécifiques avant de procéder aux étapes de traitement et de classification. Par exemple, l'étape de pré filtrage peut comporter une étape de vérification de l'appartenance au corpus de document.

Un procédé de classification selon l'invention comporte avantageusement une étape de segmentation 130 du texte du document numérique Di. Comme cela a été détaillé, le document numérique Di comporte du texte et est destiné à être catégorisé.

Cette segmentation est de préférence réalisée en une pluralité de séquences textuelles Sj.

L'étape de segmentation est généralement réalisée par un ou plusieurs processeurs 10.

Cette étape est une étape clé du procédé 100 selon l'invention. Elle permet de diviser un document numérique en parties plus petites et plus faciles à gérer, qui peuvent être analysées individuellement en vue d'une classification plus précise et rapide du document numérique dans son ensemble. Ce découpage améliore la précision et la rapidité de la classification globale du document.

La segmentation peut être réalisée selon des méthodes classiques de l'état de la technique comme les segmentation basée sur des fenêtres glissantes. Dans cette méthode, une fenêtre de taille fixe est autorisée à glisser sur le texte du document numérique, capturant ainsi de petites sous-séquences de mots. Ces sous-séquences peuvent ensuite être considérées comme des séquences textuelles individuelles. Toutefois, de préférence, l'étape d'identification d'une pluralité de séquences textuelles Sj ne consiste pas en l'utilisation d'une méthode de la fenêtre coulissante.

Alternativement, la segmentation peut mettre en oeuvre différentes approches ou méthodes complémentaires. Par exemple, la segmentation 130 du texte du document numérique Di peut comporter :

- une segmentation basée sur des phrases.
- une segmentation basée sur des règles de phrases.
- une approche statistique utilisant des algorithmes d'optimisation pour déterminer les points de rupture les plus probables ;
- une segmentation sémantique pour isoler des sujets ou des significations spécifiques ; et/ou

- une extraction d'entités nommées sous forme de séquences distinctes ;

L'étape d'identification d'une pluralité de séquences textuelles (Sj) peut comporter une segmentation au niveau des phrases. Par exemple, la segmentation basée sur des phrases peut comporter une analyse syntaxique préalable du texte, un traitement des cas particuliers comme les abréviations et acronymes, et une gestion des citations et parenthèses imbriquées. La détection précise des frontières de phrases peut bénéficier également de la prise en compte des ambiguïtés de ponctuation et des spécificités de la langue. Il s'agit d'une approche dans laquelle chaque phrase d'un document textuel est considérée comme une séquence individuelle. Dans ce cas, les séquences textuelles sont identifiées en divisant le texte au niveau des limites des phrases, généralement marquées par des signes de ponctuation tels que des points, des points d'exclamation ou des points d'interrogation.

L'étape d'identification d'une pluralité de séquences textuelles (Sj) peut comporter une segmentation sémantique. Ici, la segmentation des textes peut être effectuée sur la base de leur signification sémantique déduite ou du sujet qu'ils abordent. La segmentation sémantique peut s'appuyer sur des techniques d'analyse thématique, l'identification des transitions conceptuelles, et l'utilisation de ressources lexicales spécialisées pour détecter les changements de sujet ou de contexte sémantique.

L'étape d'identification d'une pluralité de séquences textuelles (Sj) peut comporter une segmentation des phrases. La phrase est ici divisée en plusieurs séquences. La division est réalisée à partir de règles expertes pouvant par exemple inclure la présence de points-virgules ou de retour chariot. La segmentation basée sur des règles de phrases peut comporter des expressions régulières adaptées au domaine, des règles de découpage basées sur la structure syntaxique, et des heuristiques tenant compte du contexte local. Ces règles peuvent être affinées selon la nature des documents traités. Une telle méthode est très efficace car elle peut être adaptée en fonction du corpus de documents étudiés et qu'elle permet d'atteindre un niveau de granulométrie permettant des performances plus élevées que les méthodes de l'art antérieur.

La segmentation sémantique pour isoler des sujets ou des significations spécifiques peut comporter l'analyse des cooccurrences lexicales, la détection des ruptures thématiques, et l'exploitation de ressources terminologiques spécifiques au domaine d'application.

L'étape d'identification d'une pluralité de séquences textuelles (Sj) peut comporter une extraction des noms propres. L'extraction d'entités nommées sous forme de séquences distinctes peut comporter des modèles statistiques d'apprentissage, des dictionnaires spécialisés, et des règles contextuelles pour la désambiguïsation. Cette extraction peut être enrichie par des techniques de résolution des coréférences et d'analyse des relations entre entités. Les séquences contenant des noms propres, des entités nommées ou des entités non nommées peuvent constituer des séquences textuelles importantes pour la classification et sont donc extraites.

L'étape d'identification d'une pluralité de séquences textuelles (Sj) de préférence ne consiste pas en une segmentation en paragraphes. Si un document numérique est structuré en paragraphes, chaque paragraphe peut être considéré comme une séquence textuelle. Cela peut permettre de capturer des informations contextuelles plus larges que la segmentation basée sur les phrases. Il y a une dilution des concepts et une perte d'information ne permettant pas d'identifier des signaux faibles. L'étape d'identification d'une pluralité de séquences textuelles (Sj) de préférence ne consiste pas en une utilisation de méthode des n-grammes. Un n-gramme est une séquence contiguë de n éléments d'un texte donné. Le nombre "n" peut être déterminé en fonction des exigences spécifiques de l'application. Les n-grammes peuvent être basés sur des caractères ou des mots. Par exemple, dans une approche basée sur les mots (3 grammes), tous les trois mots consécutifs du texte forment une séquence textuelle. Cette méthode est moins efficace probablement car elle utilise moins de contexte.

Un procédé de classification selon l'invention comporte avantageusement une étape de vectorisation de séquence 140. Cette étape correspond notamment au calcul d'un vecteur de séquence VSj pour chaque séquence textuelle Sj.

Cette vectorisation ou calcul d'un vecteur de séquence est de préférence réalisé en utilisant une approche d'intégration sensible au contexte.

L'étape de vectorisation de séquence 140 textuelle est généralement réalisée par un ou plusieurs processeurs 10.

Avantageusement, cette étape permet de convertir chaque séquence de texte en un vecteur qui encode des informations contextuelles ou sémantiques, à l'aide de techniques avancées telles que : des réseaux neuronaux (par exemple, réseaux récurrents, LSTM, GRU) ou des modèles basés sur des transformateurs (par exemple, BERT, GPT). Cette étape vise à produire des représentations vectorielles contextuelles, surpassant les méthodes de base basées sur la fréquence.

En particulier, ce calcul par un ou plusieurs processeurs permet de générer un vecteur VSj pour chacune des séquences textuelles. Cette étape permet de convertir chaque séquence textuelle identifié en une forme numérique qu'un ordinateur peut traiter plus rapidement. Ce processus, également appelé extraction de caractéristiques ou vectorisation, transforme les données textuelles en vecteurs de caractéristiques qui capturent les aspects significatifs du texte, tels que la sémantique et le contexte.

Le calcul du vecteur de séquence de préférence ne consiste pas en l'utilisation d'un modèle de de TF-IDF (« Term Frequency-Inverse Document Frequency ») ou associé. Cette méthode est une variante de l'approche BoW dans laquelle, outre la fréquence des termes, la fréquence inverse des documents est également prise en compte. Cela permet de réduire le poids des mots courants dans le document et d'augmenter le poids des mots rares dans le corpus de documents. Le calcul du vecteur de séquence de préférence ne consiste pas en l'utilisation d'un modèle de sac de mots (BoW). Dans ce modèle, chaque séquence textuelle est représentée par un vecteur dans un espace à haute dimension où chaque dimension correspond à un mot unique du corpus textuel, et la valeur de chaque dimension correspond au nombre ou à la fréquence de ce mot dans la séquence textuelle. Le calcul du vecteur de séquence de préférence ne consiste pas en l'utilisation d'un modèle de type Word2-Vec. Cette procédure fait correspondre chaque mot du texte à un espace vectoriel continu de telle sorte que les mots ayant des significations similaires tendent à être proches dans cet espace.

L'étape de calcul 140 d'un vecteur (VSj) pour chacune des séquences textuelles permet de convertir chaque séquence textuelle identifiée en une forme numérique qu'un ordinateur peut traiter plus rapidement. Ce processus, également appelé extraction de caractéristiques ou vectorisation, transforme les données textuelles en vecteurs de caractéristiques qui capturent les aspects significatifs du texte, tels que la sémantique et le contexte.

L'étape de calcul 140 d'un vecteur (VSj) peut comporter l'utilisation pour une majorité des vecteurs d'au moins 4 mots, de préférence d'au moins 5 mots pour le calcul du vecteur. Cela permet de saisir le contexte ou au moins une partie du contexte.

L'étape de calcul 140 d'un vecteur (VSj) peut comporter l'utilisation d'un réseau de neurones. Par exemple un réseau de neuronaux récurrents (RNN), ou des formes plus avancées telles que les LSTM ou les GRU. De telles méthodes sont efficaces dans le contexte de l'invention et peuvent générer des vecteurs de séquence qui capturent la dépendance séquentielle entre les mots dans une séquence de texte. L'état caché final de ces modèles peut être utilisé pour représenter la séquence.

L'étape de calcul 140 d'un vecteur (VSj) peut comporter l'utilisation d'un réseau de neurone comportant un mécanisme d'attention, tel qu'un modèle basé sur des transformers (comme BERT, GPT). Ces modèles, qui utilisent des architectures de transformers, sont conçus prendre en compte le contexte dans une phrase et la préservation de l'ordre des mots. Ils codent un mot en fonction du contexte qui l'entoure, ce qui permet de mieux saisir la sémantique.

En plus des méthodes mentionnées, les alternatives suivantes peuvent être envisagées pour la vectorisation de séquence : Utilisation de modèles pré-entraînés sur des données spécifiques au corpus de document étudié pour améliorer la précision de la classification ; Réduction de dimensionnalité comme l'Analyse en Composantes Principales (ACP) ou la t-SNE, pour réduire la dimensionnalité des vecteurs tout en préservant l'information pertinente, améliorant ainsi l'efficacité computationnelle.

Un procédé de classification selon l'invention comporte avantageusement une étape de classification des séquences textuelles 150. Cette étape correspond notamment à la classification des vecteurs de séquence VSj générés lors de l'étape précédentes et correspondant aux séquences textuelles Sj.

L'étape de classification 150 est généralement réalisée par un ou plusieurs processeurs 10.

Cette classification permet de classer chaque séquence textuelle Sj dans au moins une d'une pluralité de catégories Ck. Elle est par exemple mise en oeuvre en comparant le vecteur de séquence VSj avec des vecteurs de référence. Il y a alors comparaison de chaque vecteur de séquence à des vecteurs de référence correspondant à des catégories de séquences textuelles spécifiques et généralement prédéfinies.

La classification peut mettre en oeuvre des mesures de similarité (p. ex., similarité cosinus) pour attribuer chaque séquence au vecteur de référence ou au grappe correspondant le plus proche.

La classification peut être basée sur des modèles supervisés (par exemple, des réseaux de neurones ou des arbres de décision) ou non supervisés (par exemple, clustering spectral ou hiérarchique). L'intégration de modèles pré-entraînés sur des corpus externes, comme BERT ou GPT, peut enrichir les performances.

L'identification d'une catégorie Ck la plus probable pour chacun des vecteurs de séquence VS permet l'attribution d'au moins une étiquette catégorielle à chaque vecteur de séquence sur la base de sa proximité avec le vecteur de référence lié à chaque catégorie. Il s'agit essentiellement de prédire la catégorie la plus probable pour chaque séquence textuelle à l'aide de méthodes d'apprentissage automatique ou de méthodes statistiques.

L'identification d'une catégorie Ck la plus probable peut comporter une étape de calcul d'une similarité cosinus. Alternativement, une distance euclidienne peut être utilisée mais elle est moins performante. La similitude du cosinus mesure le cosinus de l'angle entre le vecteur de séquence et le vecteur de référence. Si les vecteurs sont parfaitement alignés, on observe une similarité maximale (valeur du cosinus égale à 1). Cette méthode est très efficace dans les espaces à haute dimension comme dans la présente invention.

L'identification d'une catégorie Ck la plus probable peut comporter une étape de regroupement hiérarchique, également connu sous le nom de regroupement agglomératif. Cette méthode d'analyse en grappes permet de construire une hiérarchie de grappes. Il s'agit d'une alternative au clustering plat, où l'algorithme crée un certain nombre de clusters et assigne chaque point à un cluster.

En particulier, cette étape peut comporter :

- assigner chaque point de données à sa propre grappe, ce qui signifie que s'il y a "N" points de données, nous avons "N" grappes au départ ;
- Calculer la matrice de proximité qui contient la distance entre tous les points.
- Identifiez la paire de grappes la plus proche et fusionnez-les en une seule grappe, de sorte que le nombre de grappes soit réduit d'une unité.
- Recalculez les distances entre la nouvelle grappe et chacune des anciennes grappes.
- Répétez les étapes 3 et 4 jusqu'à ce que tous les points de données soient regroupés en une seule grappe.
- Le résultat est une représentation arborescente des points de données appelée dendrogramme, utile pour comprendre les données à différents niveaux de regroupement. À différents niveaux du dendrogramme, il est possible de choisir différentes grappes de points de données en coupant le dendrogramme au niveau souhaité.
- De façon préférée la méthode de regroupement est une méthode de type BIRCH (Balanced itérative Reducing and Clustering using Hiérarchies) ou CURE (Clustering Using Représentatives)..

La classification peut également être réalisée en mettant en oeuvre une variété de méthodes complémentaires ou alternatives, adaptées au type de données et aux objectifs spécifiques du procédé. Ces méthodes permettent d'améliorer la précision, la flexibilité et l'adaptabilité de l'étape de classification des séquences textuelles Sj.

Par exemple des méthodes de « Clustering » basé sur la densité telles que DBSCAN peuvent identifier des structures complexes dans les données sans nécessiter de spécification préalable du nombre de clusters. La méthode de clustering spectral, en utilisant les valeurs propres de la matrice de similarité des données pour effectuer le clustering, permet d'améliorer les résultats. Les paramètres et critères d'arrêt peuvent être déterminés en fonction d'indicateurs comme l'indice de Davies-Bouldin ou le coefficient de silhouette.

Dans certains cas, une séquence textuelle peut appartenir à plusieurs catégories simultanément. La classification peut alors inclure des approches multi-étiquettes, comme les Classifier Chains ou Binary Relevance, permettant d'attribuer plusieurs étiquettes à une séquence. Les modèles probabilistes, utilisant des distributions de probabilité pour évaluer la pertinence de chaque catégorie pour une séquence donnée.

De façon préférée, l'étape de classification ou d'identification d'une catégorie Ck dans le procédé selon l'invention peut reposer sur une comparaison du vecteur de séquence à des vecteurs de référence, chaque vecteur de référence étant associé à une catégorie spécifique. Le vecteur de séquence VS est alors affecté à la catégorie Ck correspondant au vecteur de référence VR le plus proche. Cette proximité est généralement déterminée par une analyse de similarité cosinusoïdale, bien adaptée pour comparer des vecteurs dans des espaces de grande dimension.

Un procédé de classification selon l'invention comporte avantageusement une étape de construction 160 d'un vecteur de document VDi. Cette étape permet notamment de synthétiser, dans une représentation compacte et exploitable par un ordinateur, les informations issues de la classification des séquences textuelles Sj. En agrégeant les résultats de classification, cette étape offre une vue globale sur la distribution des catégories dans le document numérique étudié, facilitant ainsi les étapes ultérieures de classification à l'échelle du document numérique.

Cette étape de construction 160 est généralement réalisée par un ou plusieurs processeurs 10.

Le vecteur de document peut être unidimensionnel ou multidimensionnel, selon le niveau de détail souhaité pour représenter les catégories présentes dans le document numérique Di. En outre, le vecteur de document VDi comporte des valeurs chiffrées correspondant ou dérivées du nombre de séquences textuelles associées à chaque catégorie. Cette valeur chiffrée peut être normalisée pour tenir compte des différences de taille entre documents et correspondre, par exemple, à un ratio de séquences textuelles associées à chaque catégorie par rapport au nombre total de séquences textuelles dans le document numérique étudié.

Cette étape permet d'agréger la classification individuelle des séquences textuelles Sj dans un vecteur de document VDi, où chaque valeur représente une catégorie de séquence textuelle dans le corpus. Ainsi, chacune des valeurs reflète le nombre ou la proportion de séquences affectées à une catégorie donnée, résumant la distribution des catégories des séquences textuelles au sein du document numérique. Par exemple, un vecteur de document pourrait contenir les proportions suivantes pour un document Di : [0,3 pour la catégorie A, 0,5 pour la catégorie B, 0,2 pour la catégorie C], indiquant ainsi une prédominance des séquences textuelles de la catégorie B.

De façon préférée, les catégories des séquences textuelles ne sont pas identiques aux catégories des documents à classifier. Par exemple :

Pour un courriel, les séquences textuelles peuvent être classées dans des catégories sémantiques telles que requête spécifique, information commerciale, informations personnelles, ou instructions. Le courriel, dans son ensemble, sera classé dans l'une des catégories globales suivantes : spam, demande de support client, ou information promotionnelle

Pour un document juridique, les séquences textuelles peuvent être catégorisées dans des catégories sémantiques telles que : introduction contextuelle, définition des parties, exposé des faits, ou clauses spécifiques. Le document juridique dans son ensemble sera ensuite classé dans l'une des catégories globales suivantes : contrat, rapport juridique, ou acte législatif.

Pour un article scientifique, les séquences textuelles peuvent être classées en fonction de leur contenu sémantique dans des catégories telles que contexte théorique, méthodologie, résultats expérimentaux, ou discussion des implications. L'article sera ensuite classé dans l'une des catégories globales suivantes : biologie moléculaire, physique des matériaux, ou mathématiques appliquées.

L'étape de calcul d'un vecteur de document VDi les valeurs de chacune des dimensions dudit vecteur de document VDi étant fonction du nombre de vecteurs de séquence associés à chacune des catégories. Cette étape aboutit à la construction d'un vecteur représentatif pour chaque document. Le vecteur de document VDi agit comme un résumé compact des vecteurs de séquence contenus dans le document numérique, chaque dimension ou valeur représentant une catégorie spécifique identifiée dans le corpus de documents. Par cette méthodologie, le vecteur VDi reflète de manière concise la distribution par catégorie des séquences textuelles au sein du document.

Le vecteur de document peut n'avoir qu'une dimension avec autant de valeurs qu'il y a de catégories, l'approche peut être comprise comme la création d'un tableau ou d'une liste à une dimension où chaque entrée ou élément du tableau correspond à une catégorie spécifique. Cela peut être visualisé comme une ligne dans un tableau, où chaque cellule correspond à une catégorie et contient une valeur représentant la quantité ou l'importance des vecteurs de séquence associés à la catégorie en question.

Pour plus de clarté, considérons qu'il y a 2500 catégories identifiées dans le corpus. Un vecteur de document VDi serait alors un tableau de 2500 éléments. Chaque élément de ce tableau, disons l'élément [i], correspondrait à la i-ième catégorie (C[i]), et la valeur de cet élément serait déterminée par le nombre (ou une autre mesure appropriée) de vecteurs de séquence dans le document numérique associé à la catégorie C[i].

L'étape de calcul d'un vecteur de document VDi peut comporter un comptage des séquences. L'approche la plus simple consisterait à compter le nombre de vecteurs de séquence associés à chaque catégorie et à placer cette valeur dans la position correspondante du tableau. Ici, la valeur de l'élément représente la fréquence de chaque catégorie.

L'étape de calcul d'un vecteur de document VDi peut également comporter une normalisation des valeurs. Par exemple :

- Une normalisation par rapport au nombre total de séquences textuelles du document numérique. Cette méthode transforme chaque valeur en une proportion relative, rendant le vecteur comparable entre des documents de tailles différentes.
- Une normalisation logarithmique pour réduire l'impact des catégories dominantes lorsque certaines catégories sont sur-représentées dans le document.
- Une normalisation par z-score pour ajuster les valeurs en fonction de la moyenne et de l'écart-type des fréquences des catégories dans le corpus, ce qui permet de mieux identifier les catégories atypiques pour un document numérique donné.

Afin d'éviter tout biais en faveur des catégories dont le nombre de mots est naturellement élevé, il pourrait être utile de normaliser les valeurs de chaque catégorie. Pour ce faire, on peut calculer le rapport entre les vecteurs de séquence d'une catégorie et le nombre total de vecteurs de séquence dans le document numérique.

Pour mettre l'accent sur les catégories qui sont plus spécifiques à un document numérique donné, une pondération de type IDF (« inverse document frequency ») peut être appliquée au nombre de vecteurs de séquence. Cela permet de réduire le poids des catégories communes tout en donnant plus d'importance aux catégories rares qui peuvent mieux définir le document. Ainsi, l'étape de calcul d'un vecteur de document VDi peut également intégrer des pondérations spécifiques aux catégories. Par exemple, une pondération telle que la mesure TF-IDF (Term Frequency-Inverse Document Frequency) peut être appliquée pour accorder une importance plus élevée aux catégories rares dans le corpus, qui peuvent fournir des informations discriminantes importantes.

Pour convertir les valeurs du tableau en probabilités dont la somme est égale à 1, une fonction Softmax peut être appliquée au tableau. On obtient ainsi une interprétation probabiliste de la distribution des catégories pour chaque document numérique.

Des techniques de réduction de la dimensionnalité (telles que l'ACP, le t-SNE ou les autoencodeurs) peuvent être appliquées au tableau afin de réduire sa taille tout en préservant autant d'informations que possible. Ces techniques peuvent inclure :

- PCA (Principal Component Analysis) pour capturer l'essentiel de la variance des données dans un espace de dimension réduite.
- t-SNE (t-Distributed Stochastic Neighbor Embedding) pour projeter les vecteurs dans un espace de dimension inférieure tout en préservant les relations de proximité entre les documents.
- Sélection de caractéristiques pour conserver uniquement les catégories les plus représentatives ou les plus pertinentes pour la classification finale du document.

L'étape de calcul du vecteur de document VDi peut être adaptée à différents cas d'usage. Par exemple, dans un document juridique, les catégories associées aux séquences textuelles peuvent inclure clauses financières, clauses de responsabilité ou définitions des parties, tandis que dans un article scientifique, elles pourraient inclure méthodes expérimentales, résultats ou discussion théorique. Ces catégories, une fois agrégées dans VDi, permettent d'orienter la classification globale du document vers des catégories comme contrat commercial ou publication en biologie moléculaire.

En conclusion, l'étape de calcul d'un vecteur de document VDi constitue un élément central du procédé de classification. Elle permet d'obtenir une représentation numérique synthétique et normalisée d'un document numérique en fonction de sa distribution sémantique interne, offrant ainsi une base robuste pour l'étape finale de catégorisation globale du document.

Un procédé de classification selon l'invention comporte avantageusement une étape de classification 170 du document numérique. Cette étape permet notamment de déterminer une catégorie globale ou finale pour le document numérique, sur la base des informations synthétisées dans le vecteur de document VDi. Cette étape constitue le point culminant du procédé, où les caractéristiques agrégées du document numérique sont analysées pour en tirer une conclusion catégorielle du document numérique.

Cette étape de classification 170 est généralement réalisée par un ou plusieurs processeurs 10. Elle peut être effectuée en temps réel ou de manière différée, en fonction de la complexité des modèles de classification et de la taille des données à traiter. De préférence elle est réalisée en moins d'une minute.

L'étape de classification du document numérique peut reposer sur l'utilisation d'un modèle d'apprentissage spécifiquement entraîné pour associer les vecteurs de documents VDi aux catégories correspondantes. Le modèle, en comparant un nouveau vecteur de document aux modèles ou limites apprises, prédit la ou les catégories les plus appropriées pour le document numérique d'entrée. Divers modèles supervisés peuvent être utilisés à cette fin, notamment la régression logistique, les machines à vecteurs de support (SVM), les réseaux neuronaux, les arbres de décision ou les classificateurs Naive Bayes. Ces modèles sont entraînés à partir de documents numérique annotés pour garantir une association précise des vecteurs VDi aux classes cibles. Des modèles avancés d'apprentissage profond, tels que les réseaux neuronaux convolutifs (CNN), les réseaux neuronaux récurrents (RNN) ou les modèles basés sur des transformateurs (comme BERT), peuvent également être mis en oeuvre pour capturer automatiquement des caractéristiques complexes des vecteurs VDi. Ces approches sont particulièrement efficaces lorsque le corpus de données est suffisamment volumineux. En outre, des méthodes d'ensemble, telles que les forêts aléatoires (Random Forests) ou le Gradient Boosting, peuvent être utilisées pour combiner plusieurs modèles afin d'améliorer les performances de classification et réduire les risques de surajustement. Le procédé est également compatible avec des scénarios de classification multi-étiquettes, où un document numérique peut appartenir à plusieurs catégories simultanément. Des modèles comme One-vs-Rest (où un modèle distinct est entraîné pour chaque catégorie) ou des techniques avancées comme les chaînes de classificateurs peuvent être appliqués. Si les données étiquetées sont rares, des approches semi-supervisées ou non supervisées peuvent être mises en oeuvre, telles que le regroupement par K-moyennes ou le clustering hiérarchique. Ces modèles permettent de détecter des motifs dans les données sans nécessiter de grandes quantités d'étiquettes. Enfin, l'apprentissage par transfert peut être exploité, en ajustant des modèles pré-entraînés pour des tâches spécifiques, ce qui est particulièrement utile lorsque les données étiquetées sont limitées. Dans des contextes où le coût d'étiquetage est élevé, l'apprentissage actif peut être utilisé pour optimiser le processus d'annotation, le modèle guidant le choix des documents à étiqueter en priorité afin de minimiser les efforts manuels tout en maximisant les performances du système.

Ainsi, de façon générale, cette étape de classification correspond généralement à l'application d'un modèle de classification. Le modèle est appliqué au vecteur de document (VDi) qui contient une représentation numérique du document basée sur la distribution (de préférence sémantique) des séquences textuelles. Le modèle peut être un modèle d'apprentissage automatique, spécialement entraîné pour classifier les documents numérique en fonction de leurs vecteurs de document VDi. Les modèles utilisés peuvent inclure :

- Arbres de décision : ces modèles construisent une hiérarchie de décisions basée sur les dimensions du vecteur VDi, permettant une classification rapide et interprétable.
- Machines à vecteurs de support (SVM) : ces algorithmes projettent les vecteurs VDi dans un espace de haute dimension pour maximiser la séparation entre les catégories cibles.
- Réseaux de neurones : les modèles de classification avancés, tels que les réseaux neuronaux profonds, peuvent être utilisés pour capturer des relations complexes entre les dimensions du vecteur VDi et les catégories globales. Par exemple, un réseau de neurones dense ou un réseau convolutionnel appliqué à des vecteurs normalisés peut être utilisé pour des classifications précises.
- Méthodes bayésiennes : Ces méthodes probabilistes peuvent être utilisées pour attribuer une catégorie avec un degré de confiance basé sur la probabilité conditionnelle des catégories données les valeurs du vecteur VDi.

C'est cette application du modèle qui permet de générer une attribution de catégorie finale au document numérique. En particulier,

- Le modèle analyse les valeurs des dimensions du vecteur VDi, qui reflètent la répartition des catégories sémantiques des séquences textuelles du document numérique. Par exemple, un document numérique juridique peut être classé dans la catégorie contrat commercial en fonction de la prépondérance de catégories telles que clauses de responsabilité ou conditions financières dans le vecteur VDi.
- Le modèle peut également inclure des mécanismes de pondération pour attribuer une importance variable aux dimensions spécifiques du vecteur VDi, en fonction de leur pertinence pour la catégorie cible.
- Dans certains cas, une classification probabiliste multi-catégories peut être réalisée, où le modèle attribue un score de probabilité à chaque catégorie possible. Par exemple, un courriel peut recevoir une probabilité de 70 % pour être classé comme spam et 30 % pour être classé comme demande de support.

En particulier cette étape de catégorisation peut comporter l'application d'un modèle de classification entraîné (par exemple, SVM, arbres de décision, méthodes bayésiennes, réseaux de neurones) au vecteur de document VDi. Avantageusement, le modèle utilisé a été spécifiquement entraîné sur un corpus étiqueté. Il permet de préférence de traiter le vecteur de document pour affecter le document numérique à une ou plusieurs catégories de document.

Divers modèles de classification peuvent être utilisée.

Machines à vecteurs de support (SVM). Les SVM sont des modèles d'apprentissage automatique supervisé efficaces pour la catégorisation de données textuelles. Ils construisent un hyperplan dans un espace de grande dimension pour séparer les catégories de manière optimale. Grâce à des fonctions de noyau adaptées (par exemple, noyaux linéaires, polynomiaux ou RBF), les SVM peuvent gérer efficacement des données textuelles de grande dimension. Pour un vecteur VDi, le SVM attribue la catégorie finale en fonction de sa position relative par rapport à l'hyperplan.

Arbres de décision. Les arbres de décision fonctionnent en construisant un modèle arborescent où chaque noeud correspond à une règle de décision basée sur les valeurs des dimensions du vecteur VDi. Chaque feuille de l'arbre correspond à une catégorie finale. Cette méthode est intuitive et interprétable, ce qui en fait une option intéressante pour des systèmes nécessitant une transparence dans la prise de décision.

Méthodes bayésiennes naïves. Ce classificateur probabiliste applique le théorème de Bayes en supposant une indépendance conditionnelle entre les dimensions du vecteur VDi. Dans le cadre de la catégorisation de documents textuels, cette méthode met en évidence les concepts dominants indépendamment des interactions possibles entre les catégories, ce qui peut être utile pour détecter des signaux faibles dans les données.

Réseaux de neurones. Les réseaux de neurones peuvent être utilisés pour des classifications complexes grâce à leur capacité à modéliser des relations non linéaires dans les données. Les variantes suivantes sont particulièrement pertinentes :

Réseaux de neurones convolutifs (CNN). Ces modèles sont efficaces pour capturer les caractéristiques locales et contextuelles des dimensions du vecteur VDi, même lorsque les données présentent des structures complexes.

Réseaux de neurones récurrents (RNN), tels que LSTM ou GRU. Bien qu'ils soient principalement utilisés pour des données séquentielles, ils peuvent être adaptés pour traiter des vecteurs en prenant en compte la dépendance entre les dimensions.

Transformers. Les modèles basés sur des transformers, tels que BERT ou GPT, peuvent être adaptés pour analyser les vecteurs VDi en tenant compte de la pondération relative des dimensions.

Techniques d'ensemble. Des approches telles que les forêts aléatoires ou le gradient boosting utilisent une combinaison de plusieurs « apprenants faibles » (arbres de décision) pour produire une prédiction robuste. Ces méthodes sont particulièrement utiles dans les cas où les catégories sont associées à plusieurs vecteurs de référence, garantissant une plus grande précision grâce à une prise de décision collective.

Méthode des $kkk$-voisins les plus proches (k-NN). Cette méthode d'apprentissage basé sur des instances attribue une catégorie à un vecteur VDi en fonction des k vecteurs les plus proches dans l'espace de formation. La catégorie finale est déterminée par vote majoritaire des k voisins. Une variante pondérée peut également être utilisée, où la contribution de chaque voisin est pondérée en fonction de sa distance par rapport au vecteur cible.

Algorithmes de regroupement supervisés. Les algorithmes comme les k-means ou le clustering hiérarchique peuvent être utilisés si les catégories sont associées à des groupes de vecteurs de référence. Dans ce cas, la catégorisation est guidée par une fonction objective (par exemple, distance euclidienne ou similarité cosin.) pour attribuer le document numérique au groupe de catégories le plus proche.

Un procédé de classification 100 selon la présente invention peut également comporter une étape d'identification de séquences textuelles influentes. Cette étape peut de préférence comporter une détermination des séquences textuelles Sj qui ont le plus contribué à l'attribution de la catégorie finale du document numérique Di. Pour cela, plusieurs approches peuvent être utilisées.

Dans le procédé selon l'invention, chaque séquence textuelle Sj est associée à une catégorie sémantique Ck lors de l'étape de classification. Le poids ou la pertinence de Sj dans le vecteur de document numérique VDi peut être calculé en fonction de sa contribution à la dimension correspondante. Une méthode consiste alors à attribuer un score à chaque séquence en fonction de sa fréquence ou de sa pondération dans les catégories clés du vecteur Vdi.

Dans le procédé selon l'invention, des méthodes telles que SHAP (SHapley Additive exPlanations) ou LIME (Local interprétable Model-agnostic Explanations) peuvent être appliquées pour identifier les séquences textuelles ayant eu le plus grand impact sur la classification globale.

Dans le procédé selon l'invention, une analyse de similarité entre chaque séquence Sj et les vecteurs de référence VRk des catégories peut être effectuée pour identifier celles qui ont contribué de manière décisive à l'association du document numérique à une catégorie donnée.

Ainsi, chaque séquence Sj peut être visualisée avec son score d'influence, ce qui permet de comprendre les contributions relatives de différentes parties du document numérique. Par exemple, dans un document numérique juridique classé comme contrat commercial, les séquences textuelles associées à des clauses financières ou des définitions contractuelles pourraient être identifiées comme ayant un poids élevé.

Un procédé de classification 100 selon la présente invention peut également comporter une étape comparaison de vecteurs de documents numérique. En effet, une fois la classification effectuée, cette étape vise à identifier, dans le corpus, les documents numériques ayant des similitudes avec le document numérique cible Di.

La similarité cosinusoïdale est une méthode privilégiée pour comparer les vecteurs de documents, car elle permet d'évaluer la proximité relative entre les vecteurs dans un espace de grande dimension sans être affectée par leur magnitude. D'autres mesures peuvent être utilisées, telles que la distance euclidienne, la distance de Jaccard ou la divergence de Kullback-Leibler, en fonction de la nature des données et des applications.

Les documents numérique similaires peuvent aussi être regroupés dans des clusters en utilisant des algorithmes tels que k-means, DBSCAN, ou clustering hiérarchique. Cette méthode permet non seulement d'identifier les documents numérique les plus proches d'un document numérique cible, mais également de révéler des structures thématiques dans le corpus.

Enfin, un système de recherche inversée peut être mis en place pour rechercher les N-vecteurs de document les plus proches du vecteur de document Vdi dans un corpus. Cela peut être réalisé efficacement à l'aide d'algorithmes comme l'Approximate Nearest Neighbor (ANN).

Ainsi, un procédé selon l'invention peut être utilisé pour de la recherche de documents numérique similaires (trouver des documents liés à un sujet ou à un thème similaire incluant une recherche de signaux faibles), à la détection de plagiat ou de redondance (Identifier les documents ayant un contenu fortement corrélé avec une forte précision) ; et à la recommandation de documents numérique (dans un système de bibliothèque numérique, recommander des documents numérique proches en termes de contenu ou de combinaison de contenu tel que des combinaisons de concepts).

En outre, de façon préférée, un procédé selon l'invention comporte une identification des séquences influentes et une comparaison de vecteurs de documents. Cela permet des analyses approfondies. Par exemple, une fois les documents similaires identifiés, les séquences influentes de ces documents peuvent être comparées pour détecter des motifs communs ou des thématiques récurrentes dans les catégories d'intérêt. Aussi, dans un système de recherche documentaire, l'utilisateur pourrait explorer à la fois les documents similaires et les séquences spécifiques ayant conduit à leur regroupement, facilitant ainsi une analyse plus fine du corpus.

La présente invention pourra également comporter une étape de préparation d'un modèle de segmentation des documents numérique. Cette étape vise à concevoir un modèle permettant de diviser les documents en séquences textuelles Sj significatives qui peuvent ensuite être analysées et classifiées individuellement.

Cette étape peut comporter une première sous étape de préparation des données d'entraînement. De préférence, le jeu d'entrainement inclut des documents numériques segmentés manuellement par des experts ou via des outils préexistants. Les annotations doivent indiquer les limites des séquences textuelles Sj pertinentes.

Selon les besoins spécifiques du procédé, différentes approches peuvent être sélectionnées pour effectuer la segmentation. La segmentation par règles utilise des règles prédéfinies pour identifier les limites des séquences. Par exemple, cela peut inclure la détection de signes de ponctuation (points, points-virgules, points d'interrogation) pour segmenter au niveau des phrases ; la reconnaissance des balises structurantes (titres, sections, sous-sections) dans des documents numérique structurés comme des rapports ou des articles ; ou encore l'analyse des retours à la ligne ou des paragraphes dans des formats comme .txt ou .docx. Cette méthode est simple à implémenter et interprétable, mais elle peut être limitée pour des documents numérique complexes ou non standardisés. Ces méthodes peuvent être utilisées pouré l'étape 130 de segmentation du texte.

La segmentation peut aussi être basée sur des modèles statistiques. Les modèles de type Hidden Markov Models (HMM) ou Conditional Random Fields (CRF) peuvent être entraînés sur un corpus annoté pour prédire les limites des séquences textuelles. Ces modèles peuvent apprendre des caractéristiques linguistiques telles que les transitions de structure ou la présence de mots-clés indiquant une nouvelle section.

La segmentation peut utiliser une segmentation contextuelle par apprentissage profond. Les modèles basés sur des réseaux neuronaux tels que BERT, GPT ou BiLSTM peuvent être utilisés pour prédire les limites des séquences. Ces modèles prennent en compte le contexte sémantique des mots environnants pour effectuer une segmentation précise. Par exemple, un modèle BERT peut être adapté pour détecter les frontières des segments textuels en utilisant une tâche d'étiquetage de séquence.

L'entraînement d'un modèle de segmentation peut commencer par l'extraction des caractéristiques pertinentes. Pour les modèles simples, comme CRF ou HMM, cela inclut des éléments tels que la fréquence des mots, la ponctuation ou les indices structurels, tandis que pour des modèles avancés comme BERT ou BiLSTM, des embeddings pré-entraînés sont utilisés pour capturer le contexte sémantique. Le modèle est ensuite entraîné sur un corpus annoté pour prédire les limites des séquences textuelles en minimisant une fonction de perte appropriée, et sa performance est évaluée par validation croisée à l'aide de métriques telles que la précision, le rappel et le F1-score. Une fois entraîné, le modèle est testé sur des documents numérique non vus pour évaluer sa généralisation, avec un réglage des hyperparamètres (comme la taille des fenêtres ou les seuils de segmentation) pour optimiser ses performances et corriger les erreurs fréquentes. Une fois validé, le modèle est intégré au pipeline de classification pour générer des séquences textuelles à partir des documents numérique entrants, avec possibilité d'enrichissement par des métadonnées telles que la localisation dans le document numérique ou des catégories prédictives. Enfin, des mises à jour régulières, incluant un réentraînement sur des corpus actualisés ou l'utilisation de méthodes semi-supervisées, permettent de maintenir et d'améliorer la performance du modèle face à l'évolution des données ou des structures documentaires.

La présente invention peut également comporter une étape de préparation d'un modèle de vectorisation des séquences. Cette étape vise à concevoir un modèle permettant de représenter mathématiquement chaque séquence textuelle Sj sous la forme d'un vecteur VSj qui encapsule ses caractéristiques contextuelles et/ou sémantiques. Ce modèle a pour objectif d'attribuer à chaque séquence une ou plusieurs catégories en fonction de son contenu textuel, facilitant ainsi les étapes ultérieures de classification et d'analyse. L'entrée de ce modèle de vectorisation des séquences est une forme ou une structure spécifique de données, ici des séquences textuelles identifiées dans un document numérique, et la sortie est un vecteur VSj. Ce vecteur est une représentation mathématique dans un espace à n-dimensions, contenant généralement une amplitude et une direction, qui encode des informations essentielles sur la séquence textuelle. La méthodologie ou l'algorithme employé pour calculer ce vecteur peut varier en fonction des caractéristiques des séquences et des objectifs de la classification. Au sens de l'invention, le calcul d'un vecteur est défini comme une opération ou un ensemble d'opérations réalisées par une ou plusieurs installations informatiques, telles que des processeurs.

La préparation d'un modèle de vectorisation des séquences peut comporter une première étape visant à déterminer les caractéristiques essentielles à capturer dans les vecteurs associés aux séquences textuelles. Ces caractéristiques incluent, par exemple, des propriétés lexicales telles que la fréquence des mots ou la présence de termes spécifiques, des relations contextuelles entre les mots pouvant être détectées par des modèles avancés de traitement du langage, ou encore des informations syntaxiques ou structurelles relatives aux relations grammaticales ou aux rôles des mots dans une phrase. Ces éléments sont sélectionnés de manière à ce que les vecteurs représentent de façon précise et adaptée les séquences textuelles à analyser. Les modèles contextuels, tels que BERT ou GPT, permettent d'obtenir des représentations ajustées dynamiquement au contexte global de chaque séquence, offrant ainsi une précision accrue.

L'entraînement du modèle de vectorisation repose sur l'utilisation d'un corpus structuré ou annoté, au sein duquel les séquences textuelles sont transformées en vecteurs en appliquant l'algorithme choisi. Dans le cas de modèles supervisés, ces vecteurs sont associés à des catégories cibles, et une fonction de perte appropriée est minimisée pour optimiser leur représentation. Lorsqu'un modèle pré-entraîné est utilisé, tel que BERT, une étape de fine-tuning peut être réalisée pour l'adapter à un domaine spécifique. Une fois entraîné, le modèle est validé en mesurant sa capacité à différencier des séquences associées à différentes catégories à l'aide de métriques telles que la précision, le rappel ou le F1-score. Une fois cette validation effectuée, le modèle est intégré au pipeline global pour générer automatiquement des vecteurs à partir des séquences identifiées et peut être mis à jour régulièrement afin de maintenir ses performances en fonction de l'évolution du corpus ou des données traitées.

La présente invention pourra également comporter une étape de préparation de vecteurs de référence. Cette étape vise à définir des représentations vectorielles standardisées qui serviront de points de comparaison ou de référence pour évaluer les vecteurs de séquences ou de documents au sein d'un espace vectoriel multidimensionnel. Ces vecteurs de référence permettent de structurer l'espace de classification et d'assurer une correspondance précise entre les données analysées et les catégories établies.

La présente invention pourra également comporter une étape de préparation de vecteurs de référence pour les vecteurs de séquences textuelles. Cette étape vise à générer des vecteurs représentant les catégories spécifiques auxquelles les séquences textuelles peuvent être associées. Les vecteurs de référence pour les séquences textuelles peuvent être obtenus par agrégation ou moyenne des vecteurs des séquences connues appartenant à une catégorie donnée ou encore générés à l'aide de modèles de langage pré-entraînés, ajustés pour refléter les caractéristiques les plus représentatives des catégories sémantiques.

La présente invention pourra également comporter une étape de préparation de vecteurs de référence pour les vecteurs de document. Cette étape vise à établir des représentations vectorielles globales associées aux catégories de documents, lesquelles permettent de comparer les vecteurs de document VDi générés à ces références pour attribuer une catégorie finale au document numérique. Ces vecteurs peuvent être obtenus par agrégation des vecteurs de séquences associées à une catégorie donnée ou dérivés directement des documents numérique représentatifs de chaque catégorie.

De façon générale, la préparation de vecteurs de référence comporte l'identification et l'extraction des caractéristiques pertinentes des catégories à représenter, leur transformation en vecteurs dans un espace multidimensionnel, et l'application éventuelle de méthodes de normalisation ou de pondération pour garantir que les vecteurs de référence soient adaptés aux spécificités des données traitées. Cette préparation peut inclure l'utilisation de corpus annotés pour entraîner des modèles capables de générer des vecteurs de référence robustes, ainsi que des validations itératives pour ajuster ces vecteurs en fonction de l'évolution des données ou des catégories cibles.

La présente invention pourra également comporter une étape d'entrainement d'un modèle de classification des documents à partir de vecteur de document. Cette étape repose sur l'utilisation d'un corpus de documents numérique annotés, où chaque document numérique est représenté par un vecteur VDi généré à partir des séquences textuelles qu'il contient. Les vecteurs de document servent alors d'entrée au modèle, tandis que les catégories associées aux documents numériques dans le corpus annoté constituent les sorties attendues. L'objectif de cette étape est de permettre au modèle d'apprendre les relations entre les distributions catégorielles contenues dans les vecteurs VDi et les catégories finales des documents numériques.

Pour ce faire, le modèle de classification peut être entraîné en minimisant une fonction de perte adaptée, telle que l'entropie croisée pour des classifications multicatégories. Le processus d'entraînement peut inclure différentes approches selon la complexité des données et les exigences de performance. Par exemple, des algorithmes comme les arbres de décision ou les machines à vecteurs de support (SVM) peuvent être utilisés pour des tâches nécessitant une forte explicabilité, tandis que des réseaux de neurones profonds, tels que des architectures feedforward ou des transformateurs, peuvent être employés pour capturer des relations complexes et non linéaires entre les dimensions des vecteurs VDi. L'entraînement peut également intégrer des techniques d'ensemble, telles que les forêts aléatoires ou le gradient boosting, pour améliorer la robustesse et la précision des prédictions.

Une fois le modèle entraîné, sa performance est évaluée sur un ensemble de validation, en utilisant des métriques telles que la précision, le rappel, le F1-score ou l'AUC-ROC pour les classifications binaires ou multicatégories. L'entraînement peut inclure des étapes de validation croisée pour garantir que le modèle généralise bien sur des données non vues. Enfin, des ajustements des hyperparamètres du modèle, tels que la régularisation ou la taille des couches pour les réseaux de neurones, peuvent être réalisés pour optimiser les performances. Une fois validé, le modèle est prêt à être intégré dans le pipeline global, où il sera appliqué aux vecteurs de document VDi générés à partir de nouveaux documents numériques pour leur attribuer une ou plusieurs catégories finales.

Comme illustré à la figure 3, la présente invention porte également sur un système 1 pour une classification d'un document numérique Di comportant du texte, au sein d'un corpus de documents, lequel système 1 comporte au moins un processeur 10 configuré pour :

- Segmenter le texte du document numérique Di en une pluralité de séquences textuelles ;
- Calculer un vecteur de séquence pour chaque séquence textuelle, de préférence en utilisant une approche de vectorisation sensible au contexte ;
- Classer chaque séquence textuelle dans au moins une d'une pluralité de catégories, par exemple en comparant le vecteur de séquence avec des vecteurs de référence de catégorie(s) prédéfinie(s) ;
- Construire un vecteur de document à n dimensions, de préférence à une dimension, au sein duquel au moins une dimension correspond à chacune desdites catégories, les valeurs dudit vecteur de document étant fonction de la répartition des séquences textuelles affectées à chacune de ces catégories ;
- Appliquer un modèle de classification, par exemple un modèle de classification entraîné, au vecteur de document multidimensionnel pour déterminer une attribution de catégorie pour le document numérique.

**Revendications**

1. Procédé (100) mis en oeuvre par ordinateur pour une classification d'un document numérique comportant du texte, au sein d'un corpus de documents numériques, le procédé comprenant les étapes suivantes :

   - Segmenter (130), par un ou plusieurs processeurs (10), le texte du document numérique (Di) en une pluralité de séquences textuelles (Sj) ;
   - Calculer (140), par un ou plusieurs processeurs (10), un vecteur de séquence (VSj) pour chaque séquence textuelle (Sj) ;
   - Classer (150), par un ou plusieurs processeurs (10), chaque séquence textuelle (Sj) dans au moins une d'une pluralité de catégories (Ck) ;

- Construire (160), par un ou plusieurs processeurs (10), un vecteur de document à n dimensions (VDi) au sein duquel au moins une dimension correspond à chacune desdites catégories, les valeurs dudit vecteur de document étant fonction de la répartition des séquences textuelles affectées à chacune de ces catégories ; et
- Appliquer (170), par un ou plusieurs processeurs (10), un modèle de classification au vecteur de document à n dimensions (VDi) ladite application générant une attribution de classification pour le document numérique.

2. Procédé selon la revendication 1, **caractérisé en ce que** l'étape de segmentation en une pluralité de séquences textuelles (Sj) comporte une segmentation au niveau des phrases.

3. Procédé selon l'une quelconque des revendications précédentes, **caractérisé en ce que** l'étape de segmentation en une pluralité de séquences textuelles (Sj) comporte une segmentation sémantique.

4. Procédé selon l'une quelconque des revendications précédentes, **caractérisé en ce que** l'étape de segmentation en une pluralité de séquences textuelles (Sj) comporte une extraction d'entités.

5. Procédé selon l'une quelconque des revendications précédentes, **caractérisé en ce que** l'étape de calcul, par un ou plusieurs processeurs, d'un vecteur de séquence (VSj) comporte l'utilisation pour une majorité des vecteurs d'au moins 4 mots, de préférence d'au moins 5 mots pour le calcul du vecteur.

6. Procédé selon l'une quelconque des revendications précédentes, **caractérisé en ce que** l'étape de calcul d'un vecteur de séquence (VSj) comporte l'utilisation d'un réseau de neurone comportant un mécanisme d'attention, tel qu'un modèle basé sur des transformers (comme BERT, GPT).

7. Procédé selon l'une quelconque des revendications précédentes, **caractérisé en ce que** l'étape de classement (150) comporte l'identification d'une catégorie (Ck) la plus probable utilisant une étape de calcul d'une similarité cosinusoïdale.

8. Procédé selon l'une quelconque des revendications précédentes, **caractérisé en ce que** l'étape de classement (150) comporte l'identification d'une catégorie (Ck) la plus probable, l'identification comportant une étape de regroupement hiérarchique, également connu sous le nom de regroupement agglomératif.

9. Procédé selon l'une quelconque des revendications précédentes, **caractérisé en ce que** l'étape de calcul d'un vecteur de document VDi comporte une normalisation.

10. Procédé selon l'une quelconques des revendications précédente, **caractérisé en ce que** l'étape de classification du document numérique comporte la mise en oeuvre de de réseaux de neurones.

11. Procédé selon l'une quelconque des revendications précédentes, **caractérisé en ce que**, à l'étape d'identification d'une catégorie (Ck), la catégorie (Ck) est déterminée par comparaison du vecteur de séquence (VS) à des vecteurs de référence (VR), chacun des vecteurs de référence étant associé à une catégorie et le vecteur de séquence étant associé à la catégorie du vecteur de référence le plus proche.

12. Procédé selon l'une quelconque des revendications précédentes, **caractérisé en ce que**, à l'étape d'identification d'une catégorie (Ck), le vecteur de référence le plus proche du vecteur de séquence est déterminé par une analyse de similarité cosine.

13. Procédé selon l'une quelconques des revendications précédentes **caractérisé en ce qu'**il comporte une identification des séquences textuelles ayant été impliquées dans la classification du document.

14. Procédé selon l'une quelconques des revendications précédentes **caractérisé en ce qu'**il comporte une identification au sein du corpus de document de documents associés à des vecteurs de documents présentant une similarité supérieure à un seuil prédéterminé

15. Procédé selon l'une quelconques des revendications précédentes **caractérisé en ce qu'**il comporte une génération, par un ou plusieurs processeurs, d'une représentation numérique du document comportant des noeud et des bords, les noeud étant chacun associé à au moins une catégorie de séquences.

100

110 — Réception d'un document numérique comportant du texte et destiné à être catégorisé

120 — Prétraitement du document à traiter

130 — Segmentation du texte

140 — Calcul d'un vecteur de séquence

150 — Classification de séquences textuelles

160 — Construction du vecteur multidimensionnel

170 — Application d'un modèle

180 — Identifier les séquences influentes

FIG. 1

**FIG. 2**

Europäisches Patentamt

European Patent Office

Office européen des brevets

# RAPPORT DE RECHERCHE EUROPEENNE

**Numéro de la demande**

EP 25 15 3979

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | PAPPAGARI RAGHAVENDRA ET AL: "Hierarchical Transformers for Long Document Classification", 2019 IEEE AUTOMATIC SPEECH RECOGNITION AND UNDERSTANDING WORKSHOP (ASRU), IEEE, 14 décembre 2019 (2019-12-14), pages 838-844, XP033718923, DOI: 10.1109/ASRU46091.2019.9003958 [extrait le 2020-02-19] * pages 838-840 * ----- | 1-15 | INV. G06F16/353 G06N20/00 |

**DOMAINES TECHNIQUES RECHERCHES (IPC)**

G06F
G06N

Le présent rapport a été établi pour toutes les revendications

| Lieu de la recherche | Date d'achèvement de la recherche | Examinateur |
|---|---|---|
| Munich | 16 mai 2025 | Michalski, Stéphane |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................
& : membre de la même famille, document correspondant

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- ; LI et al. *DeepPatent: patent classification with convolutional neural networks and word embedding*, 2018
- YANG et al. *Hierarchical Attention Networks for Document Classification*, 2016
- JIANG et al. *Deep Learning for Technical Document Classification*, 2021